# EUROPEAN PATENT APPLICATION

(11) **EP 4 195 626 A1**
(43) Date of publication of application: **14.06.2023**
(21) Application number: 21213571.9
(22) Date of filing: 09.12.2021
(51) Int. Cl.: H04L 65/80, H04L 65/60, H04L 65/1083, H04L 47/30, H04L 47/35

(54) **STREAMING MEDIA CONTENT AS MEDIA STREAM TO A CLIENT SYSTEM**

(71) Applicant: Koninklijke KPN N.V., 3072 AP Rotterdam (NL); NEDERLANDSE ORGANISATIE VOOR TOEGEPAST- NATUURWETENSCHAPPELIJK ONDERZOEK TNO, 2595 DA 's-Gravenhage (NL)
(72) Inventor: Brandt, Aschwin Steven Reinier, 2585 EJ The Hague (NL); STOKKING, Hans Maarten, 2292 CH Wateringen (NL)
(74) Representative: Wuyts, Koenraad Maria

(57) **Abstract**

Media content may be streamed as a media stream via a network from a server system to a client system. The client system may comprise a buffer for buffering incoming packets of the media stream. At the server system, a part of the media content may be detected which is to be played out uninterruptedly. Via the network, the client system may be signaled ahead of the playout of the part of the media content to temporarily increase a buffer occupancy its the buffer. This way, the chance of uninterrupted playout of the part may be increased, without the client system having to structurally increase its buffer occupancy during playout. This way, the disadvantages of such structural increases may be avoided or reduced in severity.

## Description

### TECHNICAL FIELD

The invention relates to a server system for, and a computer-implemented method of, streaming media content to a client system. The invention further relates to a client system for, and a computer-implemented method of, playing-out media content which is received by streaming as a media stream. The invention further relates to a system comprising the server system and the client system and to a computer-readable medium comprising data representing instructions for a computer program.

### BACKGROUND

Media content such as video content and audio content is commonly delivered to users in digital form. If media content has a temporal aspect, and in particular if media content is associated with a timeline which indicates how the media content is to be played-out over time, such digital form is typically referred to as a media stream. Such media streams are typically streamed to a client system via a network, such as the Internet or a combination of the Internet and an access network to the Internet. The media content may in some examples be streamed via a content delivery network or a software-defined network which may be instantiated over a physical network infrastructure, e.g., of the Internet, and which may be optimized for delivering media content to a sizable number of client systems simultaneously.

It is known to optimize the delivery of a media stream to a client system, so as to enable the media stream to provide the media content at sufficient quality (e.g., in term of spatial resolution, temporal resolution, bit-depth, absence of severe coding artifacts, etc.) and yet to enable the playout of the media stream to be seamless, e.g., without interruptions. Such interruptions may otherwise occur if the bitrate of the media stream is structurally or incidentally higher than the bandwidth which is available in the network for the streaming of the media stream to the client system.

As an example, when streaming media content by using techniques such as adaptive streaming, e.g., Dynamic Adaptive Streaming over HTTP (DASH) streaming [1], a client system may request segments of a media stream at a bitrate which fits within the available bandwidth, e.g., as measured by the client system. Another example is Server and Network Assisted DASH (SAND), by which the network itself may indicate bandwidth availability to a client system to enable the client system to stay within such bandwidth limitations. Yet another example is content adaptation, by which media streams may be transcoded to a format or bitrate that is more suitable to the circumstances, e.g., the currently available bandwidth. Yet another example is network bandwidth reservations: in managed networks such as the 3GPP IP Multimedia Subsystem (IMS), during session setup, a bitrate for a media stream may be negotiated and reserved for the media stream on the network path to the client system.

However, the above-described techniques may not always be available for the streaming of a media stream, and even if they are available, they may come at a cost. For example, if bandwidth is reserved in the network for streaming a media stream to a client system, but the client system pauses its playout, such bandwidth is left unutilized, meaning that bandwidth is inefficiently allocated in the network. In addition, such techniques may not always achieve seamless delivery of a media stream, as events may occur which may negatively affect the delivery of the media stream, for example as such events may be unforeseen or occur at a magnitude which may not be easily handled. Severe network congestion, temporary wireless link failure or mobile handovers may temporarily limit packet delivery to such an extent, that a buffer underrun may still occur and thus cause a playout interruption. In particular, while the above techniques may strive to have the available bandwidth to be sufficient to transport a media stream at a particular bitrate, other detrimental factors in the streaming may remain unaddressed, such as jitter.

Therefore, a client system is typically provided with a buffer to buffer incoming packets, which buffer may enable the client system to overcome momentary interruptions in the delivery of packets of the video stream and to handle jitter in the delivery of packets. However, in buffering, there is a tradeoff in choosing a suitable buffer occupancy. This buffer occupancy may indicate how far ahead packets of the media stream are buffered and thereby by how long the current playout is delayed with respect to a most recent packet, and may thus be expressed in time, e.g., as the number of seconds (or parts of seconds) of the media stream that is buffered. Such a buffer occupancy is typically controlled by the client system, for example by a streaming application running on the client system. If the buffer occupancy is chosen to be relatively high, this may allow longer and/or more frequent interruption in the content delivery to be overcome while achieving uninterrupted playout, but at the expense of there being a sizable delay when starting playout or when seeking to another temporal position in the media stream, and at the risk of transporting and buffering packets which will not be played-out, e.g., by the user ceasing playout or seeking ahead in the media stream, and thus causing network inefficiencies. Similarly, if the buffer occupancy is chosen relatively low, the delay when starting playout or seeking in the media stream may be smaller, but at the expense that longer and/or more frequent interruptions in the content delivery may not be overcome, which cases, playout of the media content may be interrupted due to a buffer underrun at the client system.

It would be desirable to be able to optimize the delivery of a media stream in a way which addresses at least one of the above-mentioned drawbacks.

Reference [2] describes a technique for a streaming client to request a streaming server for short-term transmission bursts to increase pre-buffering when the streaming client is approaching areas with bad network performance to maintain media quality. However, such a technique may rely on the streaming client being able to predict when network performance deteriorates. Disadvantageously, such deterioration may be difficult to predict reliably, and/or may be limited to the prediction of specific causes for such deterioration, e.g., poor network coverage as in [2], but not others.

### References

[1] Spiteri, K., Sitaraman, R., & Sparacio, D. (2019). From theory to practice: Improving bitrate adaptation in the DASH reference player. ACM Transactions on Multimedia Computing, Communications, and Applications (TOMM), 15(2s), 1-29.
[2] Singh, V., Ott, J., & Curcio, I. D. (2012, June). Predictive buffering for streaming video in 3G networks. In 2012 IEEE International Symposium on a World of Wireless, Mobile and Multimedia Networks (WoWMoM) (pp. 1-10). IEEE.

### SUMMARY

The following aspects of the invention seek to optimize the delivery of a media stream in a way which addresses at least one of the above-mentioned drawbacks. In particular, it may be desired to rely less on the prediction of the deterioration of network performance, as such prediction may be unreliable.

In accordance with a first aspect of the invention, a server system may be provided, which server system may be configured to stream media content to a client system. The server system may comprise:
a network interface to a network;
a processor subsystem which may be configured to, via the network, stream the media content as a media stream to the client system, wherein the client system may comprise a buffer for buffering incoming packets of the media stream;
wherein the processor subsystem may be further configured to:
   - detect a part of the media content to be played-out uninterruptedly;
   - via the network, signal the client system ahead of the playout of the part of the media content to temporarily increase a buffer occupancy of the buffer.

In accordance with a further aspect of the invention, a client system may be provided, which client system may be configured to playout media content, wherein the media content may be received by streaming as a media stream from a server system. The client system may comprise:
a network interface to a network;
a data storage for storing data;
a processor subsystem which may be configured to, via the network, receive and decode the media stream to obtain decoded media content and play-out the decoded media content, wherein the processor subsystem may be further configured to:
   - allocate a buffer in the data storage for buffering incoming packets of the media stream;
   - during the streaming of the media stream, buffer the incoming packets of the media stream in the buffer; and
   - in response to signaling received from the server system, temporarily increase a buffer occupancy of the buffer ahead of the playout of a part of the media content.

In accordance with a further aspect of the invention, computer-implemented method may be provided for, via a network, streaming media content as a media stream to a client system, wherein the client system may comprise a buffer for buffering incoming packets of the media stream. The method may comprise:
- detecting a part of the media content to be played-out uninterruptedly; and
- via the network, signaling the client system ahead of the playout of the part of the media content to temporarily increase a buffer occupancy of the buffer.

In accordance with a further aspect of the invention, computer-implemented method may be provided for playing-out media content, wherein the media content may be received by streaming as a media stream from a server system. The method may comprise:
- allocating a buffer for buffering incoming packets of the media stream;
- during the streaming of the media stream, buffering the incoming packets of the media stream in the buffer; and
- in response to signaling received from the server system, temporarily increasing a buffer occupancy of the buffer ahead of the playout of a part of the media content.

In accordance with a further aspect of the invention, a transitory or non-transitory computer-readable medium may be provided comprising data representing a computer program, wherein the computer program may comprise instructions for causing a processor system to perform any one method described in this specification.

The above measures may involve a server system streaming media content to a client system via a network, such as the Internet. The media content may be streamed as a media stream, which media stream typically comprises the media content in an encoded form. In a specific example, the media stream may be generated by steps such as encoding the media content, e.g., using a compression codec such as AVC, HEVC, VP9, etc., and packetizing the encoded media content. It is noted that media streams and their generation may be known per se, e.g., from the field of audio and/or video streaming. At the client system, the media stream may be received, for example in packetized form, e.g., as a series of packets. These packets may be sequentially decoded to obtain decoded media content to be played out, for example on a display or using speakers or a combination of both. In media streaming, the playout may already start before all of the media content is received. This may distinguish media streaming from mere download of media content, as in the latter case, the media content may be first fully downloaded before playout may start.

As already elucidated in the background section of the specification, at the client system, the packets of the media stream may be buffered before playout. Such buffering may enable the client system to overcome momentary interruptions in the delivery of packets of the video stream and to handle jitter in the delivery of packets, so as to prevent buffer underruns.

A client system may normally strive to buffer a certain amount ahead of its current playout. This 'amount ahead' may be quantified in various ways, for example in terms of time in relation to a content timeline (e.g., in seconds, e.g., 1, 2, or 5 seconds ahead) or in terms of the number of packets to be buffered or in terms of data size (e.g., in megabits or megabytes) or in terms of a number of segments of a segmented media stream. The 'amount ahead' may be a static amount or may be adaptively determined, e.g., as described in [2]. In general, a reference to 'buffering ahead' in this specification may refer to buffering parts of the media content which lie on a content timeline of the media content ahead of the current playout time. The amount which is buffered ahead may also be referred to as a buffer occupancy, in that the data to be buffered may be stored in a buffer (e.g., allocated in memory) and thereby occupy part of the buffer. Another term for buffer occupancy may be buffer allocation, referring to the part of the buffer which may be allocated for and occupied by the data of the media stream. In general, such buffer occupancy may sometimes also be referred to as 'buffer size', with the understanding that such references may refer to the size of the data stored in the buffer in cases where the buffer itself may have a different, larger size. In general, such buffer occupancy may also be referred to as a 'buffer level'.

In accordance with the above measures, the server system may be configured to detect a part of the media content which may be considered of greater semantic importance for the user consuming the media content, and which may therefore be preferably played out uninterruptedly by the client system. The part may be a temporal part of the media content, e.g., having a start time and an end time on a content timeline of the media content. A nonlimiting example of such a part may be a sports highlight in a game (e.g., a goal in soccer), a critical movie scene (e.g., a second plot point in a movie structured according to the three-act structure), a chorus in an audio song, etc. The part may in many cases represent a certain event (e.g., the goal in soccer) but may not need to. Nevertheless, the following may, for sake of explanation, interchangeably refer to the part as an event, without implying that the part is always an event. The part may for example be detected by the server system analyzing the media content, which may be possible since the media content may already be available to the streaming server in its entirety, for example to detect semantic events, or by obtaining metadata indicating parts of particular importance.

The server system may then signal the client system ahead of the playout of the part of the media content to temporarily increase a buffer occupancy of the buffer. As elucidated elsewhere, this buffer occupancy, and also its increase, may be defined in several ways, for example in time, number of packets, data size or number of segments. Increasing the buffer occupancy may thus result in the client system buffering further ahead in time along the content timeline relative to the current playout time. This may for example involve the client system already requesting the server system to transmit parts of the media content which lie further ahead in the future. The increase may be relative to a reference buffer occupancy value. As elucidated elsewhere, such a reference buffer occupancy value may for example be a static value (e.g., a given number of seconds, packets, Mbps, or segments to buffer ahead) but may also be dynamically determined. For example, if the client system uses adaptive buffering, e.g., as in [2], the increase may be relative to a current value of the adaptive buffering, or a minimum value, etc. The server system may provide such signaling before the client system reaches the part of the media content during its playout of the media content. As such, the client system may be able to increase its buffer occupancy in a timely manner, namely before reaching the part of the media content during playout, and after having played-out the part, again reduce its buffer occupancy, for example to the aforementioned reference buffer occupancy value, e.g., the static or dynamic value.

The above measures may be based on the insight that not all parts of media content may be of the same importance to a user, e.g., to a viewer or listener. Namely, some parts may be semantically more important than others. Such semantic importance may be objectively determined, for example based on content analysis techniques such as event detection. While adaptive buffering attempts to predict deteriorations in network performance and may be continued to be used by the client system, the above measures may be based on the recognition that not all deteriorations may be accurately predicted and that such prediction in adaptive buffering may at times fail. By detecting parts of semantic importance in media content and signaling this to the client system, the client system may increase its buffer occupancy ahead of the playout of such parts, which may increase the chance of uninterrupted playout of the parts. Namely, if the media stream is further buffered ahead when nearing such a part in the media stream, a deterioration in network performance may have a smaller impact on the playout, as the larger buffer occupancy may allow the client system to overcome momentary deteriorations by continuing playout from the buffer. This may have the advantage that semantically important parts of the media content, this being parts where the user may notice interruptions in the playout the most, may be played out uninterruptedly or it being less likely that the playout is interrupted. Conversely, it may be possible to select a lower reference value for a static or dynamic buffer occupancy than would otherwise be needed to facilitate uninterrupted play-out of the most important parts of the media content, since by way of the signaling, the client system may be able to temporarily increase this relatively lower reference value when needed. In other words, the client system may not need to structurally increase its buffering. A lower reference value may generally result in less delay when starting playout or seeking in the media stream, and fewer unnecessary parts of the media stream being downloaded when the user elects to stop streaming.

The following embodiments may represent embodiments of the server system and corresponding computer-implemented method, but may, unless otherwise precluded for technical reasons, also denote the existence of corresponding embodiments of the client system and corresponding computer-implemented method.

In an embodiment, said signaling may comprise signaling a start of the part of the media content. By signaling a start of the part of the media content, the client system may be able to determine when and at which speed to increase the buffer occupancy so as to have a sufficiently filled buffer when reaching the start of the part. For example, the start may be signaled as a timestamp on a content timeline of the media content, or in relation to a clock of the client system, e.g., a wall clock or playout clock. Alternatively, the signaling may indicate to the client system to immediately start increasing its buffer occupancy. Nevertheless, it may be advantageous for the client system to be able to decide when and at which speed to increase the buffer occupancy, since the client system may have more information locally available than the server system to be able to optimally decide when and at which speed to increase the buffer occupancy. Non-limiting examples of such information include, but are not limited, to the amount of available bandwidth to receive additional media stream data, the amount and timing of content recent bitrate switches (as playing at a somewhat lower quality continuously may often be preferred over switching back and forth between a somewhat lower and somewhat higher quality), the actual buffer occupancy when the signaling arrives (as e.g. buffer occupancy may be limited due to recent network congestion), etc. This way, it may be avoided that the buffer occupancy is, by way of precaution, increased too early or inadvertently increased too late.

In an embodiment, the signaling may comprise signaling an end of the part of the media content. By signaling an end of the part of the media content, the client system may be able to determine when and at which speed to decrease the buffer occupancy so as to avoid having an unnecessarily high buffer occupancy when reaching the end of the part. Alternatively, the signaling may indicate to the client system for how long the increased buffer occupancy is to be maintained, or the increased buffer occupancy may be maintained a predetermined amount of time, e.g., 5 or 10 or 20 seconds. Nevertheless, it may be advantageous for the client system to be aware of when the part ends so as to avoid unnecessary buffer occupancy.

In an embodiment, the signaling may be indicative of a value of the buffer occupancy to be temporarily maintained by the client system. The server system may thus indicate to the client system how far ahead the client system is to buffer the media content when reaching the start of the part. This may be advantageous if the server system has more information locally available than the client system to be able to optimally determine the value of the buffer occupancy. Non-limiting examples of such information include, but are not limited, to network awareness of available bandwidth (e.g., in case of MPEG Server and Networked Assisted DASH), relative semantic importance of the content part, log information from other viewers, etc.

In an embodiment, the processor subsystem of the server system may be configured to include the signaling in at least one of:
- headers of the media stream;
- a manifest file provided to the client system, wherein the manifest file identifies a network location at which the media stream is accessible; and
- one or more messages sent to the client system.

The signaling may be sent to the client system in several ways. By using the headers or the manifest file, there may not be a need for separate messages. By using separate messages, it may not be needed to modify the headers or the manifest file.

In an embodiment, the processor subsystem of the server system may be configured to detect the part of the media content by at least one of:
- parsing authoring metadata identifying the part of the media content;
- analyzing the media content to detect the part of the media content; and
- analyzing logging information of playout of the media content by one or more other client systems.

The part of the media content to be played out uninterruptedly may be identified in numerous ways, for example using content analysis techniques such as event detection. Such content analysis is known per se and may be selected and configured to match the nature of a semantic event which is to be detected. For example, if it is desired to detect a goal in a soccer match, the content analysis may analyze the video content, for example using computer vision techniques by which a position and/or trajectory of a ball may be detected in relation to a goalpost, or by analyzing the detected location and movement of the players on the field. It will be appreciated that in addition or alternatively to computer vision, any other suitable analysis technique may be used to detect a semantic event in the media content. In particular, while the semantic event may be perceived in the video content, the content analysis may be applied to other components of the media content, such as audio content, either in addition or as an alternative to a content analysis of the video content. As a result of the analysis, an event may be detected. The event may have a time duration, in that it may be defined by a start and an end. In other embodiments, the event may be detected at a time instance, without having an actual or detected time duration. A default duration may then be selected, which duration may be specific for the type of event and the type of content, e.g., 15 seconds for a goal scoring event. In general, the event may be represented by a part of the media content, and correspondingly, by a part of the media stream. Here, the term 'part' may for example refer to a group of frames or group of segments of a segmented media stream.

In addition, or alternatively to the use of content analysis, authoring metadata may be indicative of such semantic events and may be parsed to detect the part of the media content representing such semantic events. For example, the authoring metadata may identify shots and cuts between shots in a movie while denoting the significance of the shots. For example, the authoring metadata may be searched for keywords to identify semantic events of particular importance. In addition, or alternatively to both content analysis and the parsing of authoring metadata, logging information of other client systems may be analyzed. Such logging information may be indicative of semantic events. For example, if the logging information indicates that a part of the media stream is normally played-out without interruptions by other users (e.g., without electing to pause the playout or seek ahead), this may indicate that the part is of higher importance to users than other parts where users often pause or seek ahead.

In an embodiment, the processor subsystem of the server system may be configured to:
- stream the media stream as a segmented media stream to the client system, wherein the segmented media stream comprises a series of segments; and
- signal the client system one or more segment identifiers of one or more segments which contain the part and/or a byte range representing a start of the part.

The media stream may be made available for streaming as a temporally segmented media stream, meaning that the media stream may be comprised of a number of consecutive segments each having a certain length. In such segmented streaming, the client system may request consecutive segments for download, for example on the basis of a manifest file identifying the segments. The buffer occupancy may correspond to how far ahead such segments are requested for download. In segmented streaming, the start of the part may be identified to the client system by identifying a particular segment containing the start and/or by identifying a byte range representing the start. By identifying the segment and/or byte range, the client system may be able to determine when and at which speed to increase the buffer occupancy so as to have a sufficiently filled buffer when reaching the start of the part.

In an embodiment, the processor subsystem of the server system may be configured to request a network function to, for the streaming of the part of the media stream, temporarily switch from an unmanaged network to a managed network. In addition, or alternatively to signaling the client system ahead of the playout of the part of the media content to temporarily increase its buffer occupancy, the network or a network segment used for the streaming of the media stream may be switched from an unmanaged network to a managed network. In such a managed network, network performance guarantees may be given, e.g., in terms of bandwidth, latency, etc. which may allow the part of the media stream to be streamed such that buffer underruns at the client system may be avoided. For example, the network function may be a policy control function (PCF) of a telecommunications network adhering to one or more 3GPP or related standards. It may thus not be needed for the client system to increase its buffer occupancy, or a more modest increase in buffer occupancy may suffice. Advantageously, by only temporarily switching to a managed network, it may be avoided that, outside of the part of the media stream, unnecessary bandwidth or other network resources are reserved but not used for the streaming of the media stream.

The following embodiments may represent embodiments of the client system and corresponding computer-implemented method, but may, unless otherwise precluded for technical reasons, also indicate corresponding embodiments of the server system and corresponding computer-implemented method.

In an embodiment, the signaling may be indicative of a start of the part of the media content, and the processor subsystem of the client system may be configured to, in response to the signaling, increase the buffer occupancy to establish an increased buffer occupancy before the playout of the part of the media content.

In an embodiment, the processor subsystem of the client system may be configured to establish available bandwidth for increasing the buffer occupancy by temporarily reducing a bitrate at which the media stream is streamed ahead of the part of the media content. Effectively, the client system may decide to 'free up' bandwidth for increasing the buffer occupancy by reducing a bitrate of the currently streamed part of the media stream. For example, in case the media stream is streamed using an adaptive streaming technique such as MPEG-DASH, the client system may request segments at a lower bitrate as identified in the Media Presentation Description (MPD).

In a further aspect of the invention, a system may be provided, which system may comprise a server system as described in this specification and a client system as described in this specification.

It will be appreciated by those skilled in the art that two or more of the above-mentioned embodiments, implementations, and/or aspects of the invention may be combined in any way deemed useful.

Modifications and variations of any one of the systems or devices (e.g., the server system, the client system, the system), computer-implemented methods, metadata and/or computer programs, which correspond to the described modifications and variations of another one of these systems or devices, computer-implemented methods, metadata and/or computer programs, and vice versa, may be carried out by a person skilled in the art on the basis of the present description.

### BRIEF DESCRIPTION OF THE DRAWINGS

These and other aspects of the invention are apparent from and will be elucidated with reference to the embodiments described hereinafter. In the drawings,
Fig. 1 shows a server system configured to stream media content via a network as a media stream to a client system, with the client system comprising a buffer for buffering incoming packets of the media stream ahead of playout;
Fig. 2A illustrates the playout and buffering of a segmented media stream, in which the client system buffers segments of the media stream ahead of playout;
Figs. 2B and 2C illustrate the effect of a disruption in the streaming from the server system, namely a decrease in buffer occupancy at the client system, which may be followed by a buffer underrun interrupting the playout of the media content;
Fig. 3A illustrates a measure to address buffer underruns, namely the client system having increased its buffer size to buffer further ahead in the media stream;
Fig. 3B illustrates the client system temporarily increasing its buffer size ahead of the playout of a part of the media content to be played out uninterruptedly;
Fig. 4 shows a system embodying the client system or server system;
Fig. 5 shows a non-transitory computer-readable medium comprising data;
Fig. 6 shows an exemplary data processing system.

It should be noted that items which have the same reference numbers in different figures, have the same structural features and the same functions, or are the same signals. Where the function and/or structure of such an item has been explained, there is no necessity for repeated explanation thereof in the detailed description.

### Reference signs list

The following list of references and abbreviations is provided for facilitating the interpretation of the drawings and shall not be construed as limiting the claims.
- 10: network
- 20: signaling data
- 30: media stream
- 100: client system
- 110: media player
- 120: network interface
- 130: jitter & decoder buffer
- 140: decoder
- 150: display buffer
- 160: display
- 200: server system
- 210: media server
- 212: manifest file database
- 220: network interface
- 230: media content database
- 240: event detector
- 250: logging server
- 252: logging database
- 300: segmented media stream
- 310: part of media stream to be played out uninterruptedly
- 320: start of part of media stream
- 350-356: playout
- 352: playout at 0.4s in A1
- 360: start download of A4 at start playout A1
- 362: download at 80% of A4
- 370: stop
- 380: remaining time to increase buffer occupancy
- 400: system representing client system or server system
- 410: network interface
- 420: processor subsystem
- 430: data storage
- 500: computer-readable medium
- 510: non-transitory data
- 1000: exemplary data processing system
- 1002: processor
- 1004: memory element
- 1006: system bus
- 1008: local memory
- 1010: bulk storage device
- 1012: input device
- 1014: output device
- 1016: network adapter
- 1018: application

### DESCRIPTION OF EMBODIMENTS

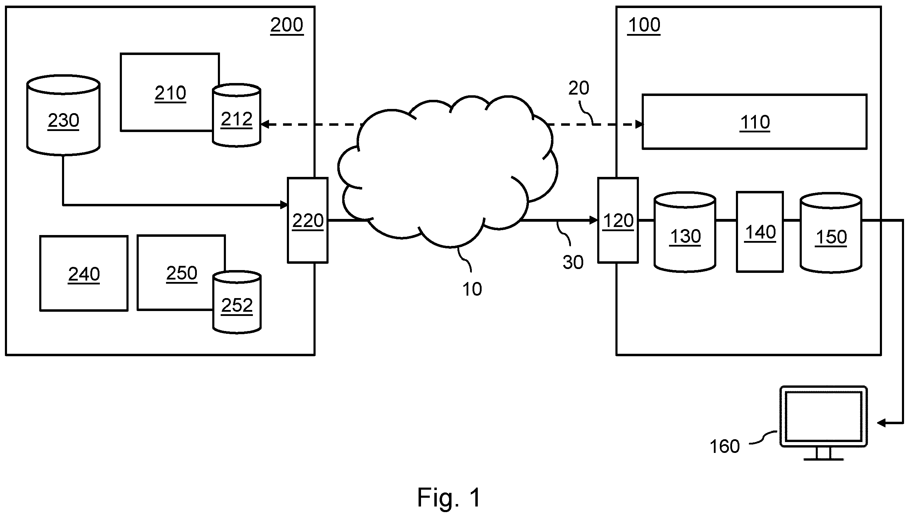

**Fig. 1** shows a server system 200 which may comprise a network interface 220 to a network 10 and a processor subsystem configured to, via the network 10, stream media content as a media stream 30 to a client system. The client system 100 may comprise a network interface 120 to the network 10 and a processor subsystem configured to, via the network 10, receive and decode the media stream to obtain decoded media content and play-out the decoded media content, for example on a display 160. It is noted that Fig. 1 does not show explicitly the processor subsystem of the client system 100 nor that of the server system 200, but rather shows functional units representing functions which may be executed by the respective processor subsystems. With continued reference to Fig. 1, the client system 100 may run an instance of a media player 110 which may arrange for the incoming packets of the media stream 30 to be buffered in a jitter & decoder buffer 130, the packets then being decoded by a decoder 140, the decoded media content being buffered in a display buffer 150, before being displayed on the display 160. The server system 200 may conversely run an instance of a media server 210 which may stream the media content from a media content database 230. In some embodiments, for example in case the media stream 30 is streamed using adaptive and/or segmented streaming, a manifest file may be provided to the client system 200, e.g., as signaling data 20, which manifest file may be retrieved by the server system 200 from a manifest file database 212.

At the server system 200, the processor subsystem may be configured to detect a part of the media content to be played out uninterruptedly. Such detection may for example be performed by an event detector 240, with the adjective 'event' referring to the example in which the part in the media content which is to be played out uninterruptedly constitutes an event, e.g., having a semantic meaning to a user. Such event detection is explained in more detail elsewhere in this specification. Furthermore, at the server system 200, the processor subsystem may, via the network 10, signal 20 the client system 100 ahead of client systems' playout of the part of the media content to temporarily increase a buffer occupancy of its buffer. As elucidated elsewhere, such signaling may be in separation of the media stream 30, e.g., as separate signaling data 20, or may be included in the media stream 30 or in the MPD retrieved from the manifest file database 212. At the client system 100, the processor subsystem may be configured to, in response to the signaling having been received from the server system 200, temporarily increase a buffer occupancy of the buffer ahead of the playout of a part of the media content.

The following further illustrates the streaming shown in Fig. 1 and describes various embodiments of the server system and of the client system. Here, the server system may also be simply referred to as a 'server' and the client system as a 'client'.

It is noted that throughout this specification, any reference to a 'media stream' may refer to a data representation of media content which may be suitable for being streamed, e.g., using known streaming techniques. Such a media stream may be encoded using known coding techniques, for example those based on MPEG-2 Part 2, MPEG-4 Part 2, H.264 (MPEG-4 Part 10), HEVC, etc. The term 'media content' may refer to a data representation of the content, e.g., the video data of a video. References to the media content being streamed imply the media content being streamed in the form of a media stream. The media content before encoding at the server or after decoding at the client may be in a format which may not be suitable or preferred for streaming.

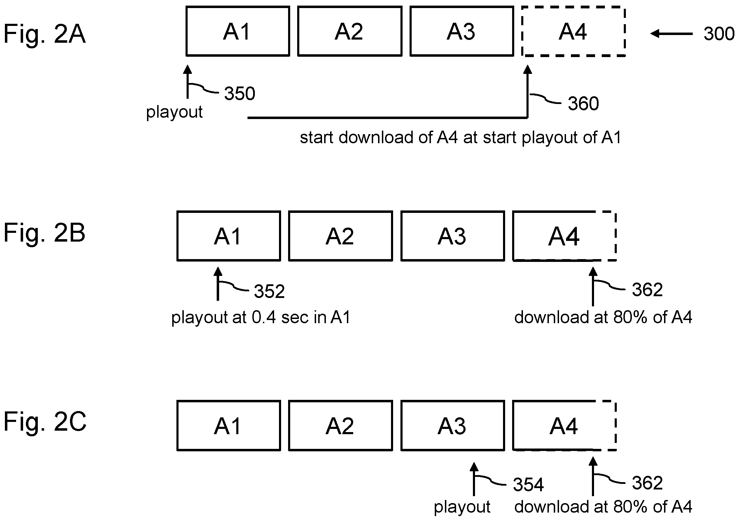

**Fig. 2A** illustrates the playout and buffering of a temporally segmented media stream 300, being in this example a media stream comprised of segments A1, A2, A3, A4, etc., in which the client buffers segments of the media stream ahead of playout. In this and following examples, the client may use a buffer-based adaptive bitrate algorithm in which the client may request segments of the media stream for download from the server, with each segment being available at different bitrates. By way of example, the following assumes the segments to be 1 sec. long and the client striving to maintain a buffer occupancy of at least three segments. By way of example, it is further assumed that segments are available in 1, 2, or 4 Mbps content bitrate (which may be considered to represent different 'representations' of the content), the available network bandwidth from the server to the client is 8 Mbps, and the client may, when this network bandwidth is indeed available, download the segments in their 4 Mbps content bitrate representation. As shown in Fig. 2, the client may at a particular moment in time have segments A1-A3 of a segmented media stream 300 in its buffer and may start playout 350 of segment A1. It is noted that segments having been downloaded may be illustrated in Figs. 2A-3B by the segments being shown with a solid outline, while a dashed outline may indicate a segment not yet having been (fully) downloaded. After starting playout 350, the client may no longer have three full segments in its buffer and may therefore start buffering segment A4 by requesting the segment for download from the server and by starting said download 360.

However, as illustrated in **Figs. 2B-2C**, the download may be interrupted, for example due to a temporary network disconnect. In particular, in Fig. 2B, the client is shown to be 0.4 seconds into the playout of segment A1 (i.e., segment A1 has been 40% played out 352) and 80% of segment A4 may have been downloaded 362 (e.g., 0.4 seconds of download of 4 Mbps content via a network having 8 Mbps of bandwidth). As is shown in Fig. 2C, despite the temporary network disconnect, the playout of the media stream 300 may continue normally as segments A1, A2 and A3 may be contained in the buffer and thus playout may continue normally. However, for the playout to further continue without interruption, the network may need to reconnect in time. This reconnect of the network may for example happen while playing-out segment A3. In such a case, segment A4 may, or may not, be downloaded in time. Namely, depending on the exact type of connection to the server, a new TCP handshake may have to take place, or a TCP congestion algorithm may have severely limited the bandwidth used by the server, or the download may have failed and may need to be restart if the media player application on the client was not able to store the downloaded parts, e.g., the 80% of segment A4, or the download may have failed and it may not be not possible to download only the remaining 20% of segment A4. It will be appreciated that a network disconnect may last longer, e.g., upon entering an area lacking mobile network coverage with a mobile client. In general, such playout may be interrupted for several reasons, e.g., due to a severe case of network congestion or a severe reduction in network bandwidth, e.g., due to a weaker radio signal, or because of another application starting a download, such as a major software update.

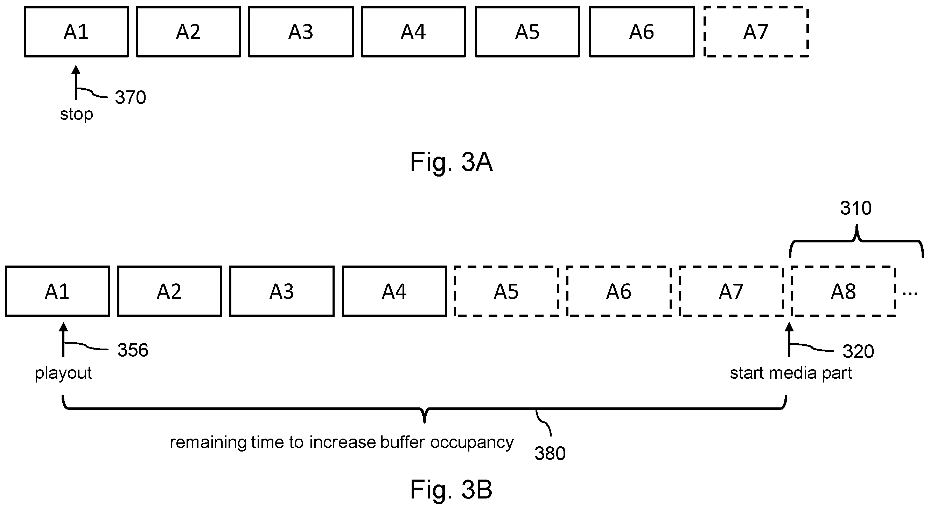

**Fig. 3A** illustrates a known measure to address buffer underruns, namely the client system having increased its buffer size to buffer further ahead in the media stream. In this example, the buffer size is now 6 segments, meaning that the client may strive to buffer 6 segments ahead of the current playout. However, when the user request playout to start, e.g., by selecting a 'play' command, content playout may in this example start later than in the example of Figs. 2A-2C, as more data needs to be downloaded before starting playout. This may be disadvantageous, in particular as users may nowadays often switch between different videos and thus video streams. While the desired buffer occupancy may be quicker reached when using a lower content bitrate, this may reduce the quality of the content and may thus also be undesirable. Moreover, if the playout is stopped 370, e.g., by a user selecting a 'stop' command during playout of segment A1, the already downloaded segments A2-A6 may not be played-out, and their download may represent a waste of (often precious) network resources. It is noted that the 'waiting for start of playout' may be addressed by starting playout earlier, e.g., when three segments have been buffered, and then gradually filling the buffer until the desired buffer occupancy of 6 segments is reached. However, disadvantageously, in such a case, the bandwidth available for further filling the buffer may be more limited as it may overlap in time with the normal buffering to stay ahead of playout, and thus lower quality segments may be downloaded to ensure the buffer gets filled on time.

**Fig. 3B** illustrates the client system temporarily increasing its buffer size ahead of the playout of a part of the media content to be played out uninterruptedly. This figure may be further explained as follows. The buffering may be different for more different parts of the media content, in that for parts of the media content which are desired to be played out uninterruptedly, the client may temporarily buffer further ahead in the media stream so as to increase its buffer occupancy. By way of illustration, Fig. 3B shows the client playing-out 356 segment A1 while three additional segments A2 - A4 may already have been buffered using a 3-segment buffer occupancy threshold similar to that of Fig. 2A. As is explained elsewhere in this specification, the client may receive signaling from the server indicating that starting 320 with segment A8, the media stream should be temporarily played out uninterruptedly or with less interruptions, or more specifically, the chance of interruptions should be reduced. For example, the signaling may directly indicate that segments A8 - A13 may represent a part 310 of the media stream 300 which is to be played-out with a reduced chance of interruptions. When receiving the signaling, the client may thus have 6 seconds time remaining 380 to increase its buffer occupancy, and in particular, to download 9 segments: segments A5 to A7 being regular content and segments A8 to A13 of the signaled content part so as to have a total of 6 segments in the buffer once playout of segments A8 starts. Given the high-quality bitrate of 4 Mbps, this may entails downloading 36 Mbit of media stream data in 6 seconds, equaling 6 Mbps of download bandwidth, which may be well within the 8 Mbps of available network bandwidth.

In another example, the available network bandwidth may only be 5 Mbps instead of 8 Mbps. In the example of Fig. 3B, this may mean that the client may need to download 36 Mbit of media stream data in 6 seconds while the available network bandwidth may only allow a download of 30 Mbit (6 sec * 5 Mbit). However, as there may be multiple representations of the segments available for streaming, the client may choose to download segments A5 to A7 at the reduced content bitrate of 2 Mbps, and segments A8 to A13 at the higher 4 Mbps content bitrate, meaning that in 6 seconds, the client may need to download 3x2 + 6x4 = 30 Mbit of data, which fits the available network bandwidth. In yet another example, the available network bandwidth may only be 4 Mbps, which may be just sufficient to keep up with the higher 4 Mbps content bitrate. The available network bandwidth may thus only allow a download of 24 Mbit (6 sec * 4 Mbit) in 6 seconds. In such a case, the client may for example download the next 6 segments at 2 Mbps bitrate and the remaining 3 segments at 4 Mbps bitrate.

In general, as will also be elucidated elsewhere in this specification, the server may signal the client to temporarily increase its buffer occupancy in numerous ways. For example, the server may, by way of signaling, identify a start of a part of the media content which is to be played out uninterruptedly. Such a start may be identified in numerous ways, for example by a timestamp on the media content's timeline, by referring to a clock of the client (e.g., a playout or wall clock), by identifying a segment of a temporally segmented media stream, by providing a byte offset representing the start, etc. In some examples, the server may additionally, by way of the signaling, identify an end of the part of the media content, which end may be identified in a same or similar manner as the start. In yet other examples, the server may provide a signal to the client which may cause the client to immediately or promptly start increasing its buffer occupancy. In yet other examples, the server may not indicate an end of the part, but the client may be configured to maintain the increased buffer occupancy only for a predetermined time period. In some examples, the server may indicate, either directly or indirectly, which buffer occupancy is to be maintained. In other examples, the client may itself determine how much the buffer occupancy is to be increased.

In general, instead of directly identifying a part of the content which is to be played out uninterruptedly, the server may indirectly identify such parts by identifying parts in which interruptions are more acceptable. For example, in audio, interruptions in periods of (near) silence may be acceptable. The client may then maintain an increased buffer occupancy for the parts of the media content outside of such identified parts. In general, the increase in buffer occupancy may be at different levels. For example, the server may signal the importance of the part, e.g., numerically with '0' representing least importance and '2' representing highest importance, with the client then further increasing the buffer occupancy for parts identified as '2' than for parts identified as '1'. It will be appreciated that the importance of a part may also be signaled in any other way, for example alphanumerically, e.g., by a label.

### Server system

With continued reference to the server system 200 of Fig. 1, it is noted the server system may run a media server 210 software application providing media streaming functionality. In the following, such media streaming may, by way of example, be described as being based on MPEG DASH, but may equally be based on a different adaptive streaming technique such as HLS from Apple or Microsoft's Smooth Streaming or may not use adaptive streaming at all. The media server 210 may in MPEG DASH-based streaming represent a host for MPD (Media Presentation Description) files that describe the media content, which description may include the URLs or other network addresses where the various content segments may be retrieved. These MPDs may be created on-the-fly by the media server 210 or may be generated beforehand and stored in and retrieved from a database 212. In some examples, the MPD may identify the part of the media content for which the buffer occupancies to be increased. In other examples, the media stream itself may identify such parts, for example via its headers. In both types of examples, it may not be needed to configure the media server 210 to provide the signaling to the client system, in that an existing media server may be used. Alternatively, the signaling may be a separate process using separate messages, e.g., using DASH SAND PER messages. In such a case, the media server 210 may be configured to provide such messaging.

It will be appreciated that separate messages may for example be used for live streaming, where such messages may be sent as soon as it is detected that certain content parts are preferably played-out without interruption. For on-demand content, it may be preferred to provide the signaling as part of the media content or metadata such as the aforementioned MPD. Namely, in a MPEG DASH streaming system, the client may be in control of playout and in control of the retrieval of content segments. As such, the media server may not be aware of where the client is in the playout of the media content, as the client may retrieve the segments from caches within a content delivery network (CDN). In addition, the client may be pausing the playout without the server being aware of such pausing. To nevertheless provide signaling via messages to the client, instead of using headers or MPDs, the server may send one or more separate messages as soon as the client retrieves the MPD. Alternatively, the server may track the playout of the client through an MPEG DASH SAND mechanism, based on STATUS messages from the client. In such a case, the DASH SAND infrastructure, which may be distributed throughout the network, may be considered part of the server system. The server system may also use the actual segment requests by a client to track the client's playout. This may involve the caches in the CDN network logging such requests and acting on these logs by either providing the signaling directly to the client or by sending logs to the server system for the server system to act on such logs.

### Detecting parts of media content

The server system may itself detect the parts of the media content to be played out uninterruptedly. For example, such parts may be detected through automated analysis of the media content, for example using computer vision algorithms. For on-demand content, such detection may take place once the media content is made available to the media server, for example by analyzing the media content from start to finish. This may allow the server system to determine the important parts of the content relative to the entire media content, in that the server system may compare a content part to an immediately preceding and an immediately following content part to determine its relative importance in terms of uninterrupted playout. For live content, this detection may take place in an ongoing manner, for example retrieving part of the content as it becomes available and analyzing such content parts in real-time. In such a case, the relative importance of content parts may only be estimated relative to preceding parts since future parts are not yet available.

Another option to detect parts of the media content to be played out uninterruptedly may be to analyze logging information. For example, other client systems may report on their playout to the server system, for example to a logging subsystem of the server system (e.g., a logging server running on the server system) or to a separate logging system, which system or subsystem may store logs of the playout actions. With continued reference to Fig. 1, the server system 200 is shown to comprise such a logging server 250 and a logging database 252 for storing logs, e.g., as received from the client systems. For example, client systems may report on playout action such as play, stop, pause, seek, etc. and may include content timeline indications as part of these reports, e.g., by indicating the content time of these actions or the segment identifier. Based on such reports, it may be determined which clients have played-out which parts of the content, during which parts clients have paused or stopped playout, which parts have been skipped, etc. The logs may then be analyzed algorithmically to determine the content parts that where watched the most, that were paused the least, etc. Various thresholds may be considered. For example, content parts may be classified to be more important and thereby warrant uninterrupted playout when they are watched by at least 20% of clients without pausing or stopping, or when they are watched by at least 30% more people than other content parts, etc.

### Client system

With continued reference to the client system 100 of Fig. 1, it is noted the server system may run a media player 110 software application providing media playout functionality. This media player may include buffering at different parts of its playout pipeline. For example, such buffering may include a jitter buffer, a decoder buffer, and a display buffer. By way of example, Fig. 1 shows the jitter buffer and the decoder buffer to be combined into a jitter and decoder buffer 130, which may be followed by a decoding operation 140 and then by a display buffer 150. It is noted that the playout pipeline may typically comprise many additional steps and/or alternative steps which are not shown in Fig. 1 for sake of illustration. For example, other buffers not shown in Fig. 1 may include a synchronization buffer and an rendering buffer.

As may be typical in the streaming of media content, the media content may be buffered before decoding 140, e.g., in the jitter and decoder buffer 130. The decoder 140 may then decode the buffered media content at playout speed, for example for video content at 25 or 30 frames per second and deliver the decoded video frames to the display buffer 150 for output on a display 160. At a start of a streaming session, the media player 110 may first set up the media stream, e.g., by retrieving the MPD and retrieving the initial content segments. The content segments may be passed to the jitter and decoder buffer 130 for playout. The media player 110 may be the entity managing the buffer occupancy of the buffer 130. As such, the media player 110 may retrieve segments when appropriate, e.g., when the buffer occupancy is below a certain threshold, to prevent or reduce buffer underruns. If the media player 110 receives signaling identifying a part of the media content to be played out uninterruptedly, or if the signaling instructs the media player 110 to immediately increase its buffer occupancy, the media player 110 may retrieve more segments per time unit, e.g., per second, than previously so as to increase its buffer occupancy to an increased level. For example, the media player 110 may request and then download segments as fast as possible until the increased buffer occupancy is achieved.

In general, the client system may use a buffer-based adaptive bitrate (ABR) algorithm, a throughput-based ABR algorithm or a hybrid (buffer & throughput)-based ABR algorithm. With a buffer-based or hybrid-based algorithm, the buffer occupancy level may be increased by increasing the aforementioned threshold. While the signaling to the client system may effectively instruct the client system to temporarily increase a buffer occupancy of the buffer, this may be done also when using a throughput-based ABR algorithm. Namely, the various ABR algorithms may be used to determine the content bitrate of the next segment or segments to retrieve, while the signaling may pertain to the time, e.g., in seconds, to buffer ahead.

It is further noted that while the buffer occupancy has so far been described in relation to a buffer which is positioned before decoding, additionally or alternatively the buffer occupancy of the display buffer 150 or another buffer after decoding 140 may be temporarily increased, such as a synchronization buffer or a decoder's output buffer. This buffer after decoding may in the following simply be referred to as an output buffer. If the decoder 140 is capable of decoding at other speeds than real-time, and in particular at a rate faster than real-time, the decoder may decode parts of the media stream as soon as they are received and deliver the decoded media content to the output buffer. The signaling may then pertain to the output buffer, in that the client system may strive to temporarily increase the buffer occupancy of the output buffer. In case of severe congestion or other types of network disruptions, the jitter and decoder buffer 130 may experience a buffer underrun, but if the buffer occupancy of the output buffer is still high enough, playout interruptions may be avoided or reduced in severity.

### Signaling

There may be various mechanisms which may be used to transmit metadata for a media stream and by which metadata the server system may signal to the client system to increase its buffer occupancy for the play-out of a certain part of the media stream. Such mechanisms may include so-called in-band, e.g., with the media stream, and out-of-band transmission, e.g., separately from the media stream. Examples of such mechanisms include, but are not limited to:
- DSM-CC (Digital Storage Media Command and Control) as defined in MPEG: ISO/IEC 13818-6:1998-Generic coding of moving pictures and associated audio information-Part 6: Extensions for DSM-CC. International Organization for Standardization (1998).
- Media Timed Events for MPEG DASH, specified in *Information technology* - *Dynamic adaptive streaming over HTTP (DASH)* - *Part 1: Media presentation description and segment formats. ISO*/*IEC. December 2019,* which Media Timed Events for MPEG DASH may be either in-band, e.g., via event message (*emsg*) boxes in ISO BMFF files, or out-of-band, e.g., via Event XML elements contained within an EventStream element in the MPD, both being also described above.

- SCTE-35, which may allow for indication of timed events, for example for insertion of advertisements.
- MPEG TEMI, which may allow for an additional stream in an MPEG Transport Stream, containing so-called 'timed events'.

Some examples will be discussed in more detail in the following. It is noted that while the above examples allow signaling of events, the measures described in this specification may make use of such mechanisms to signal a client system to increase its buffer level before the play out of a certain part of the media stream.

In particular, the following describes such signaling in the form of a DASH SAND PER message, in the MPD, or as an MPEG DASH event, with the latter MPEG DASH event being described to be signaled either in-band or via the MPD.

It is further noted that the following may refer to a buffer level as a synonym for buffer occupancy, referring in both cases to the amount of content, as measured in time units, for example in seconds, to be available in the buffer during playout.

### DASH SAND PER message

DASH SAND messages may be defined in *Information technology-Dynamic adaptive streaming over HTTP (DASH)* - *Part 5: Server and network assisted DASH (SAND) (ISO*/*IEC 23009- 5:2017, IDT).* DASH SAND may allow for sending of messages from the network to a DASH client. These messages may be referred to as PER messages, for Parameters Enhancing Reception. DASH SAND has a BufferLevel message, which may be a metrics message so a client may indicate its current buffer level to the network. The following introduces a new PER message titled 'SuggestedBufferLevel' to instruct a DASH client to change its buffer occupancy level.

| **Parameter** | | **Type** | **Cardinality** | **Description** |
|---|---|---|---|---|
| Suggested BufferLevel | | Object | 1 | Buffer level as suggested by the network until further notice. |
| | SecondsToBuffer | Double | 1 | Suggested buffer level in seconds of the media content. |
| | StartTime | date-time | 0..1 | Wall clock start time of the suggested buffer level. |
| | EndTime | date-time | 0..1 | Wall clock end time of the suggested buffer level. |

Alternatively to indicating a StartTime and EndTime in wall clock time, the message may also contain a byte range to indicate during which parts of the content timeline the buffer occupancy should be increased. Alternatively to indicating a StartTime and EndTime in wall clock time, the PER message may contain a StartTime defined as a time on the content timeline and optionally a duration during which the increased buffer level is to be maintained. The StartTime itself may also be optional, in which case the client system may as soon as possible, in other words immediately or promptly, increase its buffer occupancy level after receiving the PER message.

| **Parameter** | | **Type** | **Cardinality** | **Description** |
|---|---|---|---|---|
| Suggested BufferLevel | | Object | 1 | Buffer level as suggested by the network until further notice. |
| | SecondsToBuffer | Double | 1 | Suggested buffer level in seconds of the media content. |
| | StartTime | Double | 0..1 | Optional element indicating the time on the content timeline at which the suggested buffer level should be achieved. |
| | Duration | Double | 0..1 | Optional element indicating the duration of the suggested buffer level. This element may only be present when startTime is present. |

It is noted that while the above messages may suggest the client system by how much to increase its buffer occupancy, such suggestion may be optional, in that the client system may determine the buffer occupancy itself, e.g., without such a suggestion having been provided by the server system or other network entity.

It is further noted that MPEG DASH has numerous ways of identifying segments and when and in which order they should be played. For example, segments may be numbered or segments may refer to a time on the media timeline. As an MPD may contain multiple time periods and multiple representations per time period, the indication for a suggested buffer level may comprise a specific time period and/or representation. For example, a numbering scheme or a time scheme may be used to indicate during or for which segments or which byte ranges a certain buffer occupancy may be desired.

### In the MPD

An MPD may contain a description of the segments constituting the media stream. Accordingly, if it is desired for the client system to have established a certain buffer level for the playout of certain segments, this may be indicated in the MPD. For example, a segment list may be provided with individually addressed segments:
<*SegmentList timescale*=*"90000" duration*=*"5400000"*>
<*RepresentationIndex sourceURL*=*"representation-index.sidx"*/>
<*SegmentURL media*=*"segment-1.ts"*/>
<*SegmentURL media="segment-2.ts" suggestedBufferLevel*=*"10"*/>
<*SegmentURL media*=*"segment-3.ts"*/>
<*SegmentURL media*=*"segment-4.ts"*/>
<*SegmentURL media*=*"segment-5.ts"*/>
<*SegmentURL media*=*"segment-6.ts"*/>
<*SegmentURL media*=*"segment-7.ts"*/>
<*SegmentURL media*=*"segment-8.ts"*/>
<*SegmentURL media*=*"segment-9.ts"*/>
<*SegmentURL media*=*"segment-10.ts"*/>
</*SegmentList*>

In such an example, the suggestedBufferLevel may be added as a parameter while identifying a particular segment. In the above example, it may be indicated for segment 2 that for the playout of segment 2, a buffer level of 10 seconds is suggested. Alternatively, segments may also be indicated in the MPD using a timescale, where also the suggestedBufferLevel may be added as a parameter:
<*SegmentTimeline>*
<*S t="2108796075909" d*=*"288768"*/>
<*S t="2108796364677" d="287744" suggestedBufferLevel*=*"10"*/>
<*S t="2108796652421" d*=*"288768"*/>
<*S t="2108796941189" d*=*"287744"*/>
<*S t="2108797228933" d*=*"249856"*/>
<*lSegmentTimeline*>

It is noted that for other segments, the client system may itself determine the buffer level to use, for example based on the current network bandwidth which is available for streaming. Furthermore, in some examples, the client system may deviate from the suggested buffer level, for example by increasing the buffer level further if sufficient bandwidth is available and the playout behavior of the user was so far such that continued playout is expected, or by alternatively not increasing the buffer level or by increasing the buffer level to a level which is below the suggested buffer level. It is noted that the client system may determine the buffer level to use also in other examples, e.g., outside of segmented streaming and/or using different signaling.

It is further noted that instead of indicating the desired buffer level as an absolute value, e.g., in seconds or in another time unit, also a relative indication may be provided. This relative indication may for example be a factor by which the current buffer occupancy may be multiplied, for example in form of a BufferLevelFactor parameter. If the normal buffer occupancy is 5 seconds, then a BufferLevelFactor parameter of 2.0 may indicate to the client system that the suggested buffer occupancy is 10 seconds. As client systems may choose their own buffer strategy, a multiplication factor may be better suited than the suggestion of an absolute buffer level, as it may indicate a relative change to its buffer level instead of fully replacing the client system's current buffer level by a suggestion of a buffer level in form of an absolute value.

### As a DASH event (signaled in-band or via MPD)

The temporary increase in buffer occupancy may be seen as a MPEG DASH event, which DASH event can be signaled through for example an in-band message in the delivered media container, or as part of an MPD update. More specifically, the suggested buffer occupancy may be indicated as a DASH event, which in turn may be signaled as '*message_data[]*' in the aforementioned in-band event message, or as the event description in the MPD.

A DASH in-band event message may for example have the following format, where the message is referred to as a 'event message box':
*aligned(8) class DASHEventMessageBox extends FullBox('emsg', version, flags*=*0){*
*if (version*==*0) {*
*string scheme_id_uri;*
*string value;*
*unsigned int(32) timescale;*
*unsigned int(32) presentation_time_delta;*
*unsigned int(32) event_duration;*
*unsigned int(32) id;*
*} else if (version*==*1)* {
*unsigned int(32) timescale;*
*unsigned int(64) presentation_time;*
*unsigned int(32) event_duration;*
*unsigned int(32) id;*
*string scheme_id_uri;*
*string value;*
*}*
*unsigned int(8) message_data[];*
*}*

The message box may be used to signal events inside a media segment. If an event (representing a part to be played out uninterruptedly) occurs at the beginning of a segment, it may be insufficient to signal this only in the headers of that segment's ISO BMFF, since this may allow insufficient early time for the client system to increase its buffer level. As such, the event message may be included in a previous segment while indicating a *presentation_time* that is longer than the segment. In other words, the *presentation_time* may 'overflow' in time to the next segment and thus may allow an early alert for the client system to increase its buffer level. Another possibility is to provide an alert timing and not the event timing in the *presentation_time.* This may allow triggering an alert at a desired time in the presentation timeline (elsewhere also referred to as the content timeline), which alert may represent signaling to the client system to increase its buffer level. The alert may also be included in the ISO BMFF container of a segment preceding the segment containing the media content to be played out uninterruptedly, so as to allow sufficient time to increase the buffer level.

Instead of using the above-described message box, an XML variant of the message box may be included in an MPD, for example as part of the segment description. Typically, MPDs may be used for on-demand content, but they may also provide an option for live events. For live events, the MPD may be updated regularly.

### Such updates may be signaled to a client system using the

*MPD@minimumUpdatePeriod* field, which is part of the MPD. This may signal to a client to retrieve an MPD update every so often, e.g., every 5 seconds. This may be used to have a client retrieve new MPDs that may include the signaling of new parts of the media content for which it is suggested that the client increases its buffer level. Such an XML variant of the message box may for example have the following format:
</*-- Event Stream* -->
<*xs:complexType name*=*"EventStreamType"*>
*<xs:sequence*>
*<xs:element name*=*"Event" type*=*"EventType" minOccurs*=*"0" maxOccurs*=*"unbounded"*/>
*<xs:any namespace*=*"##other" processContents*=*"lax" minOccurs*=*"0" maxOccurs*=*"unbounded"*/>
</*xs:sequence*>
<*xs:attribute ref*=*"xiink:href"*/>
*<xs:attribute ref*=*"xlink:actuate" default*=*"onRequest"*/>
<*xs:attribute ref*=*"xlink:type" fixed="simple"*/*>*
*<xs:attribute ref*=*"xlink:show" fixed*=*"embed"*/>
*<xs:attribute name*=*"schemeIdUri" type*=*"xs:anyURI" use*=*"required"*/>
<*xs:attribute name="value" type*=*"xs:string"*/>
*<xs:attribute name*=*"timescale" type*=*"xs:unsignedInt"*/>
<*xs:attribute name*=*"presentationTimeOffset" type*=*"xs:unsignedLong" default*=*"0"*/>
</*xs:complex Type*>
<*!-- Event --*>
<*xs:complexType name*=*"EventType" mixed*=*"true"*>
<*xs:sequence*>
<*xs:any namespace*=*"##other" processContents="lax" minOccurs*=*"0" maxOccurs*=*"unbounded"*/>
</*xs:sequence*>
<*xs:attribute name*=*"presentationTime" type*=*"xs:unsignedLong" default*=*"0"*/>
<*xs:attribute name*=*"duration" type*=*"xs:unsignedLong"*/>
<*xs:attribute name*=*"id" type*=*"xs:unsignedInt"*/>
<*xs:attribute name*=*"contentEncoding" type*=*"ContentEncodingType"*/>
<*xs:attribute name*=*"messageData" type*=*"xs:string"*>
<*xs:annotation*>
<*xs:documentation*>
*Deprecated in favor of carrying the message information in the value space of the event*
</*xs:documentation*>
</*xs:annotation*>
</*xs:attribute*>
<*xs:anyAttribute namespace*=*"##other" processContents*=*"lax"*/>
</*xs:complex Type*>

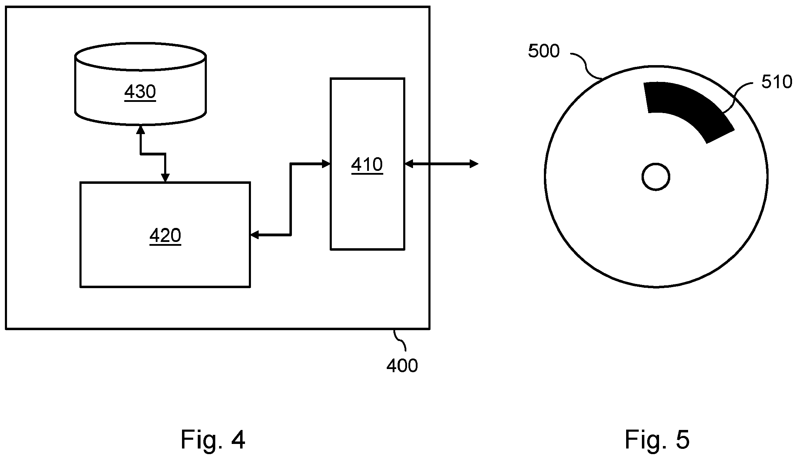

**Fig. 4** shows a system 400 which may represent the client system or the server system as previously described with reference to Fig. 1 and elsewhere. The system 400 may comprise a network interface 410, which may for example be a wireless communication interface, which may also be referred to as a radio interface, and which may be configured to connect to a mobile network infrastructure. In some examples, the network interface 410 may comprise a radio and an antenna, or a radio and an antenna connection. In a specific example, the network interface 410 may be a 4G or 5G radio interface for connecting to a 4G or 5G mobile network adhering to one or more 3GPP standards, or a Wi-Fi communication interface for connecting to a Wi-Fi network infrastructure, etc. In other examples, the network interface 410 may be a wired communication interface, such as an Ethernet or fiber-optic based interface. It is noted that the server system may typically have a wired communication interface while the client system may generally have a wired or wireless communication interface.

In general, it is noted that the data communication between the client system and the server system may involve multiple networks. For example, the client system may be connected via a radio access network to a mobile network's infrastructure and via the mobile infrastructure to the Internet, with the server system being a server which is also connected to the Internet.

The system may further comprise a processor subsystem 420 which may be configured, e.g., by hardware design or software, to perform the operations described in this specification in as far as pertaining to the client system or the server system. In general, the processor subsystem 420 may be embodied by a single Central Processing Unit (CPU), such as a x86 or ARM-based CPU, but also by a combination or system of such CPUs and/or other types of processing units, such as Graphics Processing Units (GPUs). As is also shown in Fig. 4, the system 400 may comprise a data storage 430 for storing data, including but not limited to data of the media stream or data of decoded media content or any of the metadata described in this specification. The data storage 430 may take various forms, such as a hard drive or an array of hard drives, a solid-state drive or an array of solid-state drives, a memory, etc.

Although not shown explicitly in Fig. 4, the client system may further comprise a display interface for outputting display data to a display. The display may for example an external display or an internal display of the client system, and in general may be head-mounted or non-head mounted. Using the display interface, the client system may display the media content during playout. In some embodiments, for example when the media content is Virtual Reality (VR), Augmented Reality (AR) or Mixed Reality content, the display may comprise one or more sensors, such as accelerometers and/or gyroscopes, for example to detect a pose of the user. In such embodiments, the display may provide sensor data to the client system, for example via the aforementioned display interface or via a separate interface. In other embodiments, such sensor data may be received in separation of the display. For example, the client system may use the sensor data to determine a viewing direction of the user, for example to render the media content based on the viewing direction.

In general, the client system may be embodied by a (single) device or apparatus, e.g., a smartphone, personal computer, laptop, tablet device, gaming console, set-top box, television, monitor, projector, smart watch, smart glasses, media player, media recorder, etc. In some examples, the client system may be a so-called User Equipment (UE) of a mobile telecommunication network, such as a 5G or next-gen mobile network. It is noted that the client system may also be distributed, for example across different physical devices. For example, a media player running on one client device may be linked to a content service such as Spotify or Netflix and the like, while at the same time being linked to another client device (which may or may not be on the same network) for playout through casting mechanisms such as Chromecast.

With continued reference to the server system, it is noted that in embodiments where the server system is distributed over different entities, e.g., over different servers, the processor subsystem 420 may also be distributed, e.g., over the CPUs and/or GPUs of such different servers. For example, the server system may be implemented by one or more cloud servers or by one or more edge nodes of a mobile network. In general, the server system may have its functionality distributed over different physical entities, e.g., over different physical servers. This may be because different servers are used for different functionality, e.g., a separate server for hosting the MPD files, a separate server for hosting the media content, a separate server for logging, a separate server for event detection, etc. Even when using a cloud infrastructure, the server system may be distributed over different physical entities as the cloud infrastructure may be deployed and scaled on demand over various physical servers. It is noted that for the delivery of the media content, the server system may deliver the content from a central database, but also using a network of caches placed throughout the network, often called a CDN or Content Delivery Network.

In general, each entity described in this specification may be embodied as, or in, a device or apparatus. The device or apparatus may comprise one or more (micro)processors which execute appropriate software. The processor(s) of a respective entity may be embodied by one or more of these (micro)processors. Software implementing the functionality of a respective entity may have been downloaded and/or stored in a corresponding memory or memories, e.g., in volatile memory such as RAM or in non-volatile memory such as Flash. Alternatively, the processor(s) of a respective entity may be implemented in the device or apparatus in the form of programmable logic, e.g., as a Field-Programmable Gate Array (FPGA). Any input and/or output interfaces may be implemented by respective interfaces of the device or apparatus. In general, each functional unit of a respective entity may be implemented in the form of a circuit or circuitry. A respective entity may also be implemented in a distributed manner, e.g., involving different devices or apparatus.

It is noted that any of the methods described in this specification, for example in any of the claims, may be implemented on a computer as a computer implemented method, as dedicated hardware, or as a combination of both. Instructions for the computer, e.g., executable code, may be stored on a computer-readable medium 500 as for example shown in **Fig. 5**, e.g., in the form of a series 510 of machine-readable physical marks and/or as a series of elements having different electrical, e.g., magnetic, or optical properties or values. The executable code may be stored in a transitory or non-transitory manner. Examples of computer-readable mediums include memory devices, optical storage devices, integrated circuits, servers, online software, etc. Fig. 5 shows by way of example an optical storage device 500.

In an alternative embodiment of the computer-readable medium 500, the computer-readable medium 500 may comprise transitory or non-transitory data 510 in the form of a data structure representing metadata described in this specification.

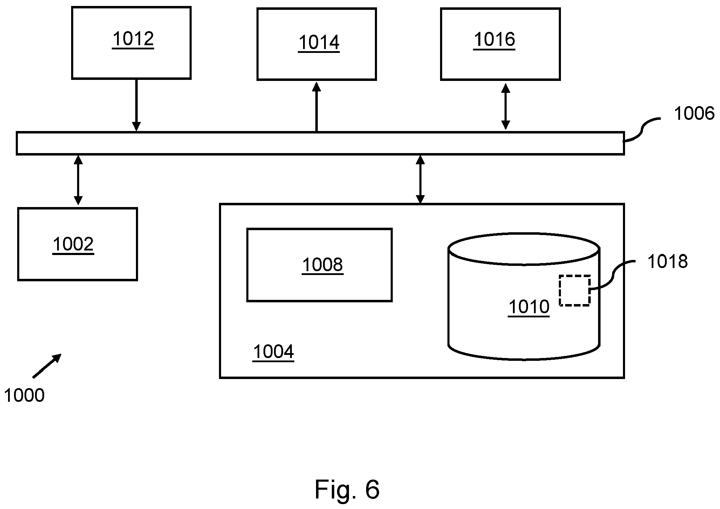

**Fig. 6** is a block diagram illustrating an exemplary data processing system 1000 that may be used in the embodiments described in this specification. Such data processing systems include data processing entities described in this specification, including but not limited to the server system and the client system.

The data processing system 1000 may include at least one processor 1002 coupled to memory elements 1004 through a system bus 1006. As such, the data processing system may store program code within memory elements 1004. Furthermore, processor 1002 may execute the program code accessed from memory elements 1004 via system bus 1006. In one aspect, data processing system may be implemented as a computer that is suitable for storing and/or executing program code. It should be appreciated, however, that data processing system 1000 may be implemented in the form of any system including a processor and memory that is capable of performing the functions described within this specification.

The memory elements 1004 may include one or more physical memory devices such as, for example, local memory 1008 and one or more bulk storage devices 1010. Local memory may refer to random access memory or other non-persistent memory device(s) generally used during actual execution of the program code. A bulk storage device may be implemented as a hard drive, solid state disk or other persistent data storage device. The data processing system 1000 may also include one or more cache memories (not shown) that provide temporary storage of at least some program code in order to reduce the number of times program code is otherwise retrieved from bulk storage device 1010 during execution.

Input/output (I/O) devices depicted as input device 1012 and output device 1014 optionally can be coupled to the data processing system. Examples of input devices may include, but are not limited to, for example, a microphone, a keyboard, a pointing device such as a mouse, a game controller, a Bluetooth controller, a VR controller, and a gesture-based input device, or the like. Examples of output devices may include, but are not limited to, for example, a monitor or display, speakers, or the like. Input device and/or output device may be coupled to data processing system either directly or through intervening I/O controllers. A network adapter 1016 may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Modems, cable modems, and Ethernet cards are examples of different types of network adapters that may be used with data processing system 1000.

As shown in Fig. 6, memory elements 1004 may store an application 1018. It should be appreciated that data processing system 1000 may further execute an operating system (not shown) that can facilitate execution of the application. The application, being implemented in the form of executable program code, can be executed by data processing system 1000, e.g., by processor 1002. Responsive to executing the application, the data processing system may be configured to perform one or more operations to be described herein in further detail. For example, data processing system 1000 may represent a server system as described with reference to Fig. 1 and elsewhere in this specification. In that case, application 1018 may represent an application that, when executed, configures data processing system 1000 to perform the functions described with reference to the server system. In another example, data processing system 1000 may represent a client system as described with reference to Fig. 1 and elsewhere in this specification. In that case, application 1018 may represent an application that, when executed, configures data processing system 1000 to perform the functions described with reference to the client system.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of' when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A server system configured to stream media content to a client system, comprising:
- a network interface to a network;
- a processor subsystem configured to, via the network, stream the media content as a media stream to the client system, wherein the client system comprises a buffer for buffering incoming packets of the media stream;
wherein the processor subsystem is further configured to:
- detect a part of the media content to be played-out uninterruptedly;
- via the network, signal the client system ahead of the playout of the part of the media content to temporarily increase a buffer occupancy of the buffer.

2. The server system according to claim 1, wherein said signaling comprises signaling a start of the part of the media content.

3. The server system according to claim 2, wherein the signaling comprises signaling an end of the part of the media content.

4. The server system according to any one of claims 1 to 3, wherein the signaling is indicative of a value of the buffer occupancy to be temporarily maintained by the client system.

5. The server system according to any one of claims 1 to 4, wherein the processor subsystem is configured to include the signaling in at least one of:
- headers of the media stream;
- a manifest file provided to the client system, wherein the manifest file identifies a network location at which the media stream is accessible; and
- one or more messages sent to the client system.

6. The server system according to any one of claims 1 to 5, wherein the processor subsystem is configured to detect the part of the media content by at least one of:
- parsing authoring metadata identifying the part of the media content;
- analyzing the media content to detect the part of the media content; and
- analyzing logging information of playout of the media content by one or more other client systems.

7. The server system according to any one of claims 1 to 6, wherein the processor subsystem is configured to:
- stream the media stream as a segmented media stream to the client system, wherein the segmented media stream comprises a series of segments; and
- signal the client system one or more segment identifiers of one or more segments which contain the part and/or a byte range representing a start of the part.

8. The server system according to any one of claims 1 to 7, wherein the processor subsystem is configured to request a network function to, for the streaming of the part of the media stream, temporarily switch from an unmanaged network to a managed network.

9. A client system configured to playout media content, wherein the media content is received by streaming as a media stream from a server system, comprising:
- a network interface to a network;
- a data storage for storing data;
- a processor subsystem configured to, via the network, receive and decode the media stream to obtain decoded media content and play-out the decoded media content, wherein the processor subsystem is further configured to:
- allocate a buffer in the data storage for buffering incoming packets of the media stream;
- during the streaming of the media stream, buffer the incoming packets of the media stream in the buffer; and
- in response to signaling received from the server system, temporarily increase a buffer occupancy of the buffer ahead of the playout of a part of the media content.

10. The client system according to claim 9, wherein the signaling is indicative of a start of the part of the media content, and wherein the processor subsystem is configured to, in response to the signaling, increase the buffer occupancy to establish an increased buffer occupancy before the playout of the part of the media content.

11. The client system according to claim 9 or 10, wherein the processor subsystem is configured to establish available bandwidth for increasing the buffer occupancy by temporarily reducing a bitrate at which the media stream is streamed ahead of the part of the media content.

12. A system comprising a server system according to any one of claims 1 to 8 and a client system according to any one of claims 9 to 11.

13. A computer-implemented method of, via a network, streaming media content as a media stream to a client system, wherein the client system comprises a buffer for buffering incoming packets of the media stream, comprising:
- detecting a part of the media content to be played-out uninterruptedly; and
- via the network, signaling the client system ahead of the playout of the part of the media content to temporarily increase a buffer occupancy of the buffer.

14. A computer-implemented method of playing-out media content, wherein the media content is received by streaming as a media stream from a server system, comprising:
- allocating a buffer for buffering incoming packets of the media stream;
- during the streaming of the media stream, buffering the incoming packets of the media stream in the buffer; and
- in response to signaling received from the server system, temporarily increasing a buffer occupancy of the buffer ahead of the playout of a part of the media content.

15. A transitory or non-transitory computer-readable medium comprising data representing a computer program, the computer program comprising instructions for causing a processor system to perform the method according to claim 13 or 14.
